# EUROPEAN PATENT APPLICATION

(11) **EP 2 602 466 A1**
(43) Date of publication of application: **12.06.2013**
(21) Application number: 11192305.8
(22) Date of filing: 07.12.2011
(51) Int. Cl.: F02K 9/18, F02K 9/22, F42B 15/10

(54) **A bomb for deployment from an air vehicle**

(71) Applicant: MBDA UK Limited, Stevenage Hertfordshire SG1 2DA (GB)
(72) Inventor: The designation of the inventor has not yet been filed
(74) Representative: BAE SYSTEMS plc Group IP Department

(57) **Abstract**

A bomb for deployment from an air vehicle comprises a rocket motor (1) for propelling the bomb. The rocket motor (1) comprises propellant (5) having an initial burning surface (9) of a first surface area. The propellant (5) at least partially defines one or more voids (11) downstream of the burning surface (9). The motor is arranged such that as the propellant (5) is burned the void(s) (11) will be exposed, thereby increasing the surface area of the burning surface, to increase the thrust of the rocket motor (1). The bomb may be relatively large (e.g. 5000lb) and may be suitable for relatively low altitude deployment.

## Description

### Technical Field

The present invention relates to a bomb for deployment from an air vehicle, a rocket motor for use on such a bomb, and a method of deploying such a bomb from an air vehicle.

### Background of the Invention

When deploying a bomb from an air vehicle, such as an aircraft, the bomb is usually turned from a launch orientation (typically forward facing in the direction of travel of the aircraft) into a dive orientation (typically downwards and substantially vertical). At some altitudes there may be insufficient time for the bomb to move from the launch orientation to the dive orientation and accelerate to a sufficient speed to adequately impact the target.

There have been efforts to address this problem. For example, in a known arrangement a bomb is fitted with a rocket motor for providing constant thrust. This thrust increases the launch speed of the bomb and thus enables the bomb to turn faster to reach the dive orientation. The rocket motor then helps accelerate the bomb towards the target. Such an arrangement is suitable for deployment at high altitude of around 8km or higher, but at medium altitudes (for example between 5km and 2km) the bomb may still be travelling too slowly when it reaches the target to provide sufficient penetration.

It is desirable to provide an arrangement that reduces or mitigates the above-mentioned problem. Bombs are relatively inexpensive weapons as they tend not to have the complexity associated with some other weaponry such as missiles. It is also therefore desirable to address the above-mentioned problem without unduly increasing the complexity and/or cost of the bomb.

### Summary of the Invention

According to a first aspect of the invention, there is provided a bomb for deployment from an air vehicle, the bomb comprising a rocket motor for propelling the bomb, wherein the rocket motor comprises propellant., the propellant having an initial burning surface, and characterised In that the propellant at least partially defines a void downstream of the initial burning surface, the rocket motor being arranged such that as the propellant is burned the void will be exposed, thereby increasing the surface area of the burning surface of the propellant to increase the thrust of the rocket motor. This provides a relatively simple arrangement for imparting a low, then high, level of thrust to the bomb. Such a thrust profile may be especially advantageous for applications in which the bomb is for launching at medium altitude; more specifically, the turn into the dive orientation may be effected using the relatively low level of thrust such that the bomb maintains velocity, and the bomb may then be accelerated downwards towards and into the target, using the relatively high level of thrust.

As the skilled person will appreciate, exposure of the void in the present invention, creates a non-negligible increase in the burning surface area and in the thrust, It will be appreciated that the void is therefore distinguished from any minor/microscopic variations in the structure of the propellant (e.g. flaws or gaps in the structure). The volume of the void is preferably at least 1% of the volume of the propellant, and more preferably at least 2%. The volume of the void may be at least 5% of the volume of the propellant. The rocket motor may be arranged such that when the void is exposed there is a step increase in the surface area of the burning surface. When the void is exposed the surface area of the burning surface may increase by at least 5%, and more preferably at least 10%. The surface area of the burning surface is increased relative to the area of the burning surface immediately prior to exposure of the void. In some embodiments of the invention, this area is the same as the area of the initial burning surface, but it need not necessarily be.

It will be appreciated that the volume of propellant/void may be arranged in a wide variety of configurations falling within the scope of the invention. Some definitions of possible arrangements are listed below: The initial burning surface may be substantially planar, and the burning surface after exposure of the void may be non-planar (and having a greater surface area than the planar initial burning surface). The volume of propellant may comprise a first region, which is void free, extending from the initial burning surface to the void. The surface area of the burning surface between the initial burning surface and the void, may be substantially constant. The propellant between the initial burning surface and the void may be a substantially cylindrical, and preferably substantially circular cylindrical, volume of propellant.

The void is free from propellant. The void may, however, contain other materials/fluids. For example, the void may contain air. The contents of the void preferably do not prevent, or more preferably do not even inhibit, combustion of the propellant. The propellant is preferably solid propellant, for example a solid fuel/oxidiser mix.

The propellant at least partially defines the void. In some embodiments of the invention, some of the void may be defined by other parts of the rocket motor (e.g. the outer casing), In other embodiments, the void may be wholly defined by the propellant (e.g. completely surrounded by propellant.).

The rocket motor may be arranged to generate a first thrust profile until exposure of the void, and a second thrust profile after exposure of the void. The average magnitude of thrust in the second profile is preferably greater than the average magnitude of thrust in the first profile. The first thrust profile is preferably sufficient for the bomb to maintain a suitable velocity. The first thrust profile is preferably arranged such that the bomb may be turned from a launch orientation to a dive orientation under the influence of the first thrust profile.

The bomb and rocket motor is a relatively simple arrangement. For example, whilst it may include basic control systems, the arrangement preferably does not include complex guidance, targeting and/or manoeuvring systems more typically seen on a missile. The arrangement is preferably designed for essentially pre-planned engagements.

It is known to vary the thrust of rocket motors *per* se. For example in some missile applications, it is known to provide a rocket motor having a variable nozzle throat such that the thrust can be varied. However, such an arrangement is relatively complex and expensive. In embodiments of the present invention, the rocket motor preferably comprises a fixed nozzle (i.e. with a fixed diameter throat). This facilitates a relatively simple arrangement.

The bomb may have a nominal weight of 500 Ib (approx 225kg) or more, and more preferably, 20001b (approx 900kg) or more. The bomb may be up to 50001b (approx 2250kg) nominal weight.

The propellant may at least partially define a plurality, or even a multiplicity of voids downstream of the initial burning surface. The rocket motor may be arranged such that as the propellant is burned, the voids will be exposed, thereby increasing the surface area of the burning surface of the propellant to increase the thrust of the rocket motor.

The bomb and rocket motor are typically integrated as a single product. In some other embodiments of the invention, the rocket motor may however be retrofitted to an existing bomb. Thus, according to another aspect of the invention, there is provided a rocket motor for use as the rocket motor described herein.

According to yet another aspect of the invention, there is provided a method of deploying a bomb from an air vehicle, the method comprising the steps of:
providing a bomb having a rocket motor for propelling the bomb into a target, the rocket motor comprising propellant, the propellant having an initial burning surface of a first surface area, and the propellant at least partially defining a void downstream of the initial burning surface,
launching the bomb and burning the propellant from the initial burning surface;
turning the bomb from a launch orientation to a dive orientation;
wherein the rocket motor is arranged such that as the propellant is burned, the void in the propellant is exposed, thereby increasing the surface area of the burning surface of the propellant to increase the thrust of the rocket motor.

The bomb is preferably launched at relatively low altitude. The altitude may be less than 5km. The altitude is preferably more than 2km.

The bomb is preferably arranged such that the void is exposed when the bomb is in the dive orientation.

In principle, the rocket motor may be used for other applications, and not necessarily a bomb. According to a further aspect of the invention, there is provided a rocket motor comprising propellant, the propellant having an initial burning surface, and **characterised in that** the propellant at least partially defines a void downstream of the initial burning surface, the rocket motor being arranged such that as the propellant is burned the void will be exposed, thereby increasing the surface area of the burning surface of the propellant to increase the thrust of the rocket motor. According to another aspect, there is provided a weapon comprising such a rocket motor.

It will be appreciated that any features described with reference to one aspect of the invention are equally applicable to any other aspect of the invention, and *vice versa.*

### Description of the Drawings

An embodiment of the invention will now be described, by way of example only, with reference to the accompanying schematic drawings of which:
Figure 1 is a schematic sectional view of a rocket motor for a bomb according to a first embodiment of the invention; and
Figure 2 is a schematic sectional view of the rocket motor in Figure 1 as the void is exposed.

### Detailed Description

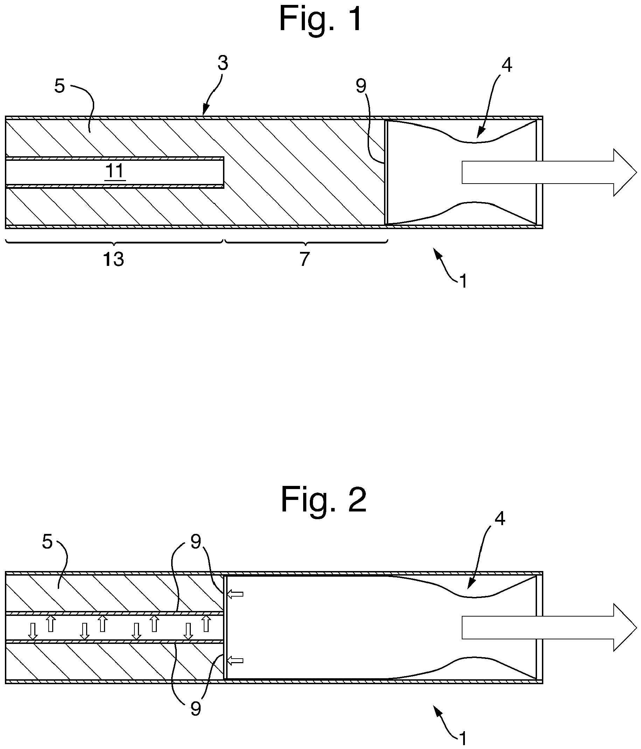

The rocket motor 1 in the first embodiment of the invention comprises a casing 3 attached to a nozzle assembly 4. The casing contains a volume of propellant 5 (which in this embodiment of the invention is a solid fuel/oxidiser mix). In common with conventional rocket motors, thrust is produced as the propellant 5 bums and combustion products are ejected at high velocity through the nozzle assembly (shown by the large arrows in Figures 1 and 2). In the first embodiment, the rocket motor is attached to the rear of a 20001b (approx 4400kg) bomb (not shown).

The rocket motor 1 in the first embodiment of the invention is a simple arrangement for providing two-stage thrust, as will be apparent from the description below: The propellant 5 in the rocket motor 1 occupies a circular cylindrical volume defined by the casing (shown in cross-section along the centre-fine of the rocket motor, in Figures 1 and 2). The volume of propellant can be notionally divided into a first region 7 and a second region 13: The first region contains a uniformly distributed mass of propellant, in a circular cylindrical volume, which extends from the initial burning surface 9, to the edge of a void 11. The second region 13 extends from the junction with the first region 7 to the end of the casing 3. This second region contains a hollow tube-like volume of propellant defining a circular cylindrical void 11 extending into the propellant along the centreline of the rocket motor.

The burn characteristics of the rocket motor are shown by Figures 1 and 2. Referring first to Figure 1, on launching the bomb the initial burn surface 9 is ignited. Since the burn surface 9 is planar and of constant cross-sectional area, the propellant 5 is consumed at a substantially constant rate and a substantially constant area of burning surface is maintained. A substantially constant thrust is therefore produced as the burning surface 9 gradually moves downstream. Movement of the propellant burning surface is indicated by the short arrows in Figures 1 and 2.

After a certain length of time, the burning surface 9 has moved sufficiently far downstream that it reaches the void 11. This stage is shown in Figure 2. As the void 11 is exposed, the surface area of the burning surface 9 is rapidly increased because the internal face of the void also becomes part of that burning surface. Figure 2 shows the surfaces of the propellant being consumed (the total surface being non-planar). This increase in the burning surface area, causes a corresponding increase in the thrust generated.

The rocket motor of Figures 1 and 2 is especially useful for bombs being deployed from an air vehicle at relatively low altitude (for example at 5km or lower). In these arrangements, conventional bombs may not have sufficient impact speed. For example, they can take too long to adopt a dive orientation and not reach sufficient velocity by the time they reach the target. When the bomb according to the first embodiment of the invention is deployed, the rocket motor enables the bomb to maintain a forward velocity that is comparable with that of the aircraft. Under the action of various control surfaces on the bomb, the bomb is turned from the launch orientation (substantially horizontal) to a dive orientation (downwards). The initial thrust of the rocket motor reduces the time taken to adopt the dive orientation (in comparison to the same bomb without a rocket motor), and in the first embodiment of the invention, the rocket motor is also arranged such that the burning surface reaches the void when the bomb is in the dive orientation, At this point the thrust significantly increases and propels the bomb to, and into, the target.

Whilst the present invention has been described and illustrated with reference to a particular embodiment, it will be appreciated by those of ordinary skill in the art that the invention lends itself to many different variations not specifically illustrated herein. For example, the void may be a number of different shapes and/or there may be more than one void. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A bomb for deployment from an air vehicle the bomb comprising a rocket motor for propelling the bomb, wherein the rocket motor comprises propellant, the propellant having an initial burning surface of a first surface area, and **characterised in that** the propellant at feast partially defines a void downstream of the initial burning surface, the rocket motor being arranged such that as the propellant is burned the void will be exposed, thereby increasing the surface area of the burning surface of the propellant to increase the thrust of the rocket motor.

2. A bomb according to claim 1 wherein the volume of the void is at least 2% of the volume of the propellant.

3. A bomb according to claim 1 or claim 2, wherein the rocket motor is arranged such that when the void is exposed there is step increase in the surface area of the burning surface.

4. A bomb according to claim 3 wherein when the void is exposed the surface area of the burning surface increases by at least 10%.

5. A bomb according to any preceding claim 1 wherein the initial burning surface is substantially planar, and the burning surface on exposure of the void is non-planar.

6. A bomb according to any preceding claim wherein the surface area of the burning surface between the initial burning surface and the void, is substantially constant.

7. A bomb according to any preceding claim, wherein the propellant between the initial burning surface and the void is a solid volume of propellant.

8. A bomb according to any preceding claim wherein the rocket motor is arranged to generate a first thrust profile until exposure of the void, and a second thrust profile after exposure of the void, the average magnitude of thrust in the second profile being greater than in the first profile.

9. A bomb according to any preceding claim, wherein the rocket motor comprises a fixed nozzle.

10. A method of deploying a bomb from an air vehicle, the method comprising the steps of:
providing a bomb having a rocket motor for propelling the bomb into a target, the rocket motor comprising propellant, the propellant having an initial burning surface of a first surface area, and the propellant at least partially defining a void downstream of the initial burning surface,
launching the bomb and burning the propellant from the initial burning surface;
turning the bomb from a launch orientation to a dive orientation;
wherein the rocket motor is arranged such that as the propellant is burned, the void in the propellant is exposed, thereby increasing the surface area of the burning surface of the propellant to increase the thrust of the rocket motor.

11. A method according to claim 8 wherein the bomb is launched at an altitude of less than 5km.

12. A rocket motor for use as the rocket motor in any preceding claim.

13. A bomb and/or rocket motor as described herein with reference to Figures 1 and 2.
